# EUROPEAN PATENT APPLICATION

(11) **EP 4 726 078 A1**
(43) Date of publication of application: **15.04.2026**
(21) Application number: 24819052.2
(22) Date of filing: 24.04.2024
(51) Int. Cl.: C25B 9/00, C02F 1/461, C25B 1/13, C25B 9/23, C25B 9/60, C25B 9/63

(54) **ELECTROLYTIC LIQUID GENERATION DEVICE**

(30) Priority: 08.06.2023 JP 2023095117
(71) Applicant: Panasonic Intellectual Property Management Co., Ltd., Kadoma-shi, Osaka 571-0057 (JP)
(72) Inventor: INAGAKI, Kenichiro, Kadoma-shi, Osaka 571-0057 (JP); IMAHORI, Osamu, Kadoma-shi, Osaka 571-0057 (JP); NAGATA, Minoru, Kadoma-shi, Osaka 571-0057 (JP); HOTTA, Mami, Kadoma-shi, Osaka 571-0057 (JP)
(74) Representative: Grünecker Patent- und Rechtsanwälte PartG mbB
(86) International application number: PCT/JP2024/015986
(87) International publication number: WO 2024/252814

(57) **Abstract**

The present disclosure provides an electrolytic liquid generation device in which generation efficiency of an electrolytic liquid in an electrolysis unit can be improved. An electrolytic liquid generation device (100) according to the present disclosure includes an electrolysis unit (1) and a housing. The electrolysis unit (1) is disposed such that a conductive film (12) is sandwiched between a first electrode (13) and a second electrode (11), and electrolyzes a liquid. The electrolysis unit (1) is disposed in a housing. The housing includes an inflow port through which a liquid to be supplied to the electrolysis unit (1) flows in and an outflow port through which an electrolytic liquid generated in the electrolysis unit (1) flows out. A flow path (61,62) for a liquid and an electrolytic liquid are formed between the inner peripheral surface of the housing and the electrolysis unit (1). The electrolysis unit (1) includes a space part penetrating the electrolysis unit (1) and through which a liquid flows from the first electrode (13) to the second electrode (11). The space part is open to the flow path (61), and at least a part of the conductive film (12) is exposed to the flow path (61).

## Description

### BACKGROUND

### 1. Technical Field

The present disclosure relates to an electrolytic liquid generation device.

### 2. Description of the Related Art

Conventionally, as an electrolytic liquid generation device, an ozone water generation device that generates ozone water (that is, an example of an electrolytic liquid) in which ozone (that is, an example of an electrolytic product) is dissolved in water is known. An electrolysis unit has a conductive film provided between the anode and the cathode. By generating a potential difference between an anode and a cathode in a state where the electrolysis unit is immersed in water, an electrolytic treatment that causes an electrochemical reaction in water is performed, and ozone water is generated (for example, see Patent Literature 1).

### Citation List

### Patent Literature

Patent Literature 1: Unexamined Japanese Patent Publication No. 2017-176993

### SUMMARY

### (Technical Problem)

However, in the electrolytic liquid generation device of Patent Literature 1, since a flow path of the liquid is present between an inner peripheral surface of a housing and the cathode, scale may accumulate on the cathode. As a result, a spatial density of ozone varies, and dissolution efficiency of ozone decreases, which may reduce the generation efficiency of the electrolytic liquid.

An object of the present disclosure is to provide an electrolytic liquid generation device in which generation efficiency of an electrolytic liquid in an electrolysis unit is improved.

### (Solution to Problem)

An electrolytic liquid generation device according to one aspect of the present disclosure includes an electrolysis unit and a housing. The electrolysis unit is disposed such that a conductive film is sandwiched between a first electrode and a second electrode, and electrolyzes a liquid. The electrolysis unit is disposed inside the housing. The first electrode and the second electrode are arranged side by side with the conductive film in a first direction. The first direction is a stacking direction of the conductive film. The housing has an inflow port through which a liquid to be supplied to the electrolysis unit flows in and an outflow port through which an electrolytic liquid generated in the electrolysis unit flows out. A flow path for the liquid and the electrolytic liquid is formed between an inner peripheral surface of the housing and the electrolysis unit. The electrolysis unit includes a space part. The space part penetrates the electrolysis unit, and the liquid flows through the space part from the first electrode to the second electrode. The space part is open to the flow path, and at least a part of the conductive film is exposed to the flow path.

An electrolytic liquid generation device according to another aspect of the present disclosure includes an electrolysis unit and a housing. The electrolysis unit is disposed such that a conductive film is provided between a first electrode and a second electrode, and electrolyzes a liquid. The electrolysis unit is disposed inside the housing. The first electrode and the second electrode are arranged side by side with the conductive film in a first direction. The first direction is a stacking direction of the conductive film. The housing has an inflow port through which a liquid to be supplied to the electrolysis unit flows in and an outflow port through which an electrolytic liquid generated in the electrolysis unit flows out. A flow path for the liquid and the electrolytic liquid is formed between an inner peripheral surface of the housing and the electrolysis unit. The flow path includes an outer flow path located between the inner peripheral surface of the housing and the first electrode. In the outer flow path, an area of a cross section close to the outflow port is smaller than an area of a cross section close to the inflow port, a normal line of the cross section close to the outflow port being a second direction, the second direction being a flow path direction of the liquid, a normal line of the cross section close to the inflow port being the second direction.

### (Advantageous Effects of Invention)

In the electrolytic liquid generation device according to one aspect of the present disclosure, it is possible to improve the generation efficiency of the electrolytic liquid in the electrolysis unit.

### BRIEF DESCRIPTION OF DRAWINGS

FIG. 1 is an exploded perspective view of an electrolytic liquid generation device according to an embodiment.
FIG. 2 is a plan view of an electrolysis unit of the electrolytic liquid generation device according to the embodiment.
FIG. 3 is a cross-sectional view of the electrolytic liquid generation device according to the embodiment with a third direction as a normal direction.
FIG. 4 is a schematic perspective view illustrating a flow path of a liquid in the electrolytic liquid generation device according to the embodiment.
FIG. 5 is a cross-sectional view of the electrolytic liquid generation device according to the embodiment with a second direction as a normal direction.

### DESCRIPTION OF EMBODIMENT

Hereinafter, an electrolytic liquid generation device according to an embodiment will be described in detail with reference to the drawings. However, each drawing described in the following embodiment is a schematic diagram, and a ratio of a size or a thickness of each component does not necessarily reflect an actual dimensional ratio. The embodiment described below is merely an example of the embodiment of the present disclosure. The present disclosure is not limited to the following embodiment, and various modifications can be made according to design as long as the effects of the present disclosure can be exhibited.

### (Embodiment)

### (1) Overview

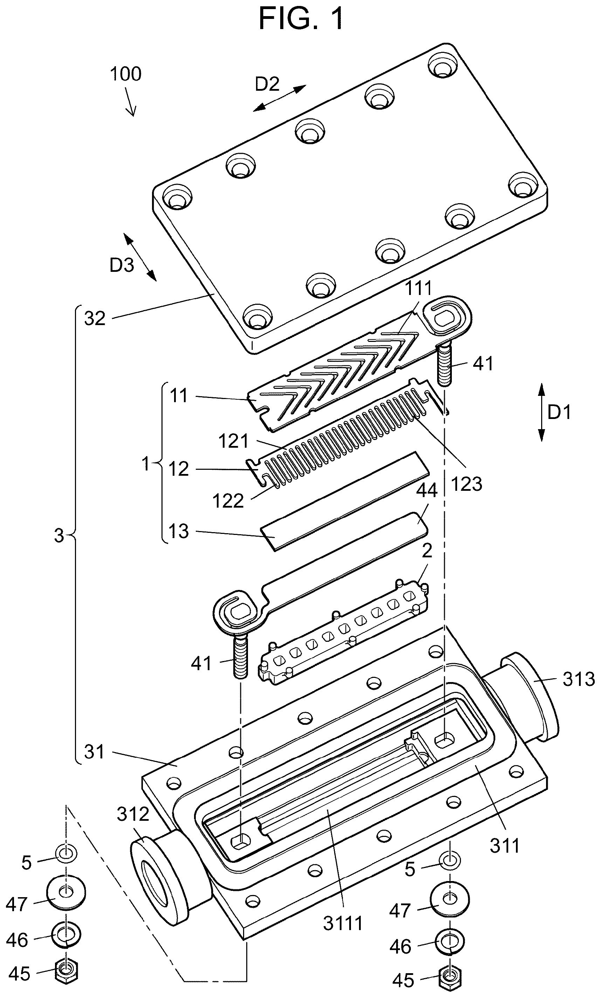

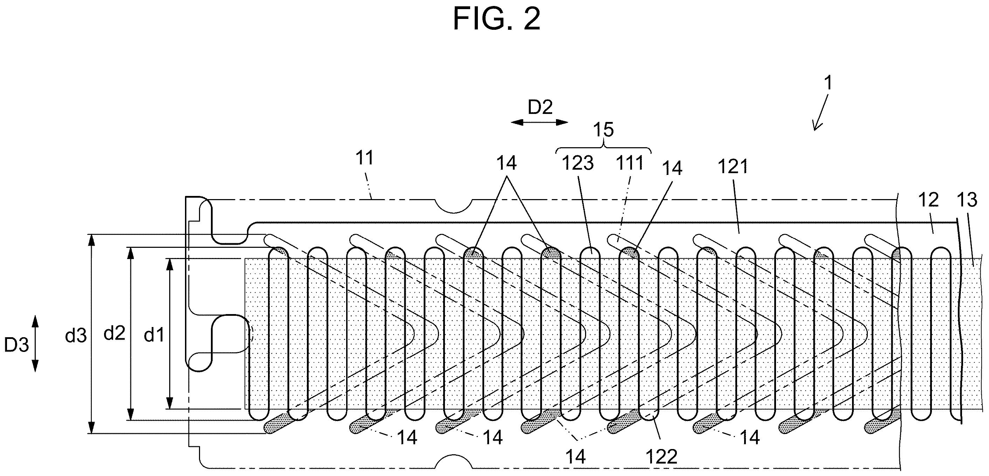

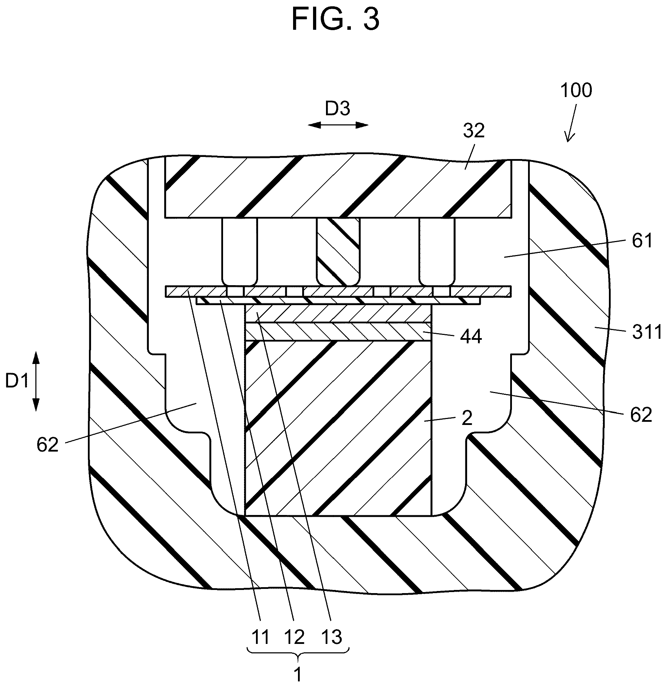

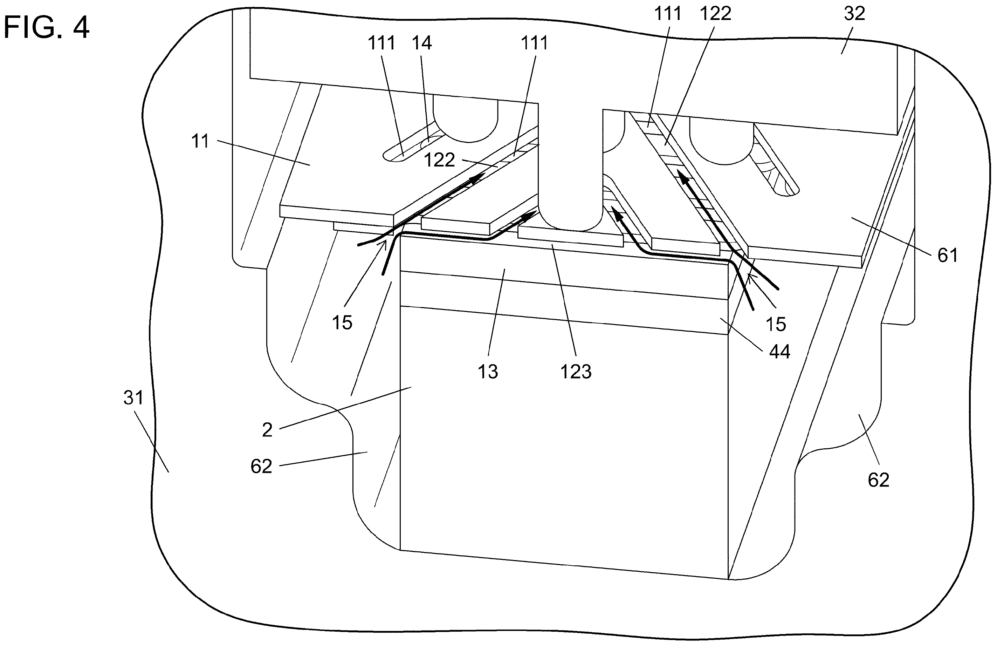

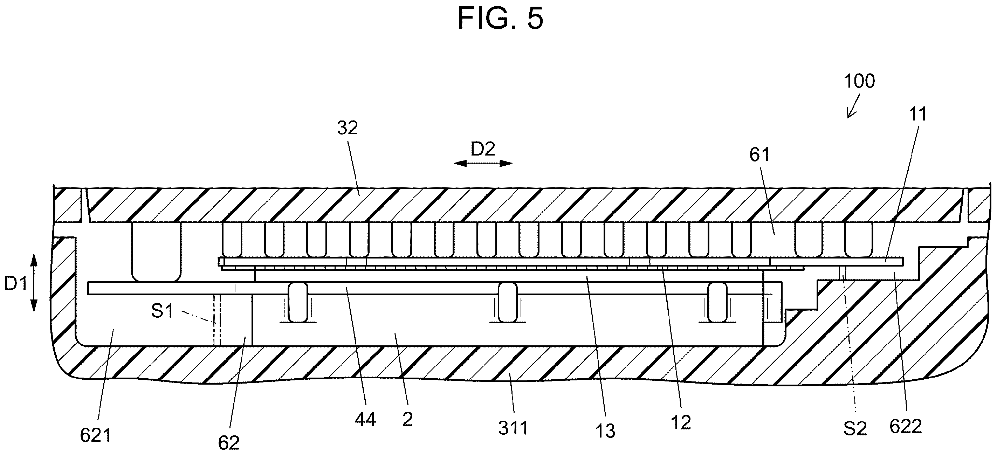

First, an outline of an electrolytic liquid generation device 100 according to an embodiment will be described with reference to FIGS. 1 to 5. FIG. 1 is an exploded perspective view of an electrolytic liquid generation device 100 according to the embodiment. FIG. 2 is a plan view of an electrolysis unit 1 of the electrolytic liquid generation device 100 according to the embodiment. FIG. 3 is a cross-sectional view of the electrolytic liquid generation device 100 according to the embodiment with the second direction D2 as a normal direction. FIG. 4 is a schematic perspective view illustrating a liquid flow path in the electrolytic liquid generation device 100 according to the embodiment. FIG. 5 is a cross-sectional view of the electrolytic liquid generation device 100 according to the embodiment with the third direction D3 as a normal direction.

The electrolytic liquid generation device 100 according to the embodiment generates an electrolytic liquid by electrolyzing a liquid. In the present embodiment, as an example, the electrolytic liquid generation device 100 is an ozone water generation device that uses tap water supplied from a water supply as the liquid and generates ozone water as the electrolytic liquid. The electrolytic liquid generation device 100, which is an ozone water generation device, generates ozone (i.e., an example of an electrolytic product) by an electrolytic process of electrolyzing tap water, and dissolves the ozone in the tap water to generate ozone water. Ozone water is effective for sterilization, deodorization, and decomposition of organic substances, and thus is widely used in various fields such as a water treatment field, a sanitary field, a food field, and a medical field.

As illustrated in FIGS. 1 and 2, the electrolytic liquid generation device 100 according to the embodiment includes the electrolysis unit 1, an elastic body 2, a housing 3, and a power feeder 44. The electrolysis unit 1 includes a first electrode and a second electrode which are a pair of electrodes, and a conductive film 12 disposed to be sandwiched between the pair of electrodes. The first electrode, the conductive film 12, and the second electrode are stacked in their respective thickness directions. In the embodiment, the first electrode is an anode 13, and the second electrode is a cathode 11. The electrolysis unit 1 electrolyzes a liquid. The electrolysis unit 1 is disposed inside the housing 3. In the electrolytic liquid generation device 100 according to the embodiment, as illustrated in FIGS. 2 and 4, the electrolysis unit 1 includes a space part 15 penetrating the electrolysis unit 1. In FIG. 4, hatching indicating a cross section is omitted. In addition, in FIG. 4, an arrow indicates a flow of tap water (that is, an example of a liquid). In the electrolytic liquid generation device 100, as shown in FIGS. 4 and 5, tap water flows into a through hole 111 of the cathode 11 from an outer flow path 62 through the space part 15. Therefore, the electrolysis product diffuses without staying in the vicinity of the electrolysis unit 1. Therefore, the electrolytic product is less likely to inhibit ozone generation by the electrolytic treatment, and the ozone water generation efficiency can be improved.

### (2) Details

Next, details of the electrolytic liquid generation device 100 according to the embodiment will be described with reference to FIGS. 1 to 5. In the following description, a stacking direction of the cathode 11, the conductive film 12, and the anode 13 in the electrolysis unit 1, which will be described later, is defined as a first direction D1. A longitudinal direction of the housing 3, which will be described later, is defined as a second direction D2. A lateral direction (that is, a width direction) of the housing 3 is defined as a third direction D3. However, these directions are not intended to limit the directions in which the electrolytic liquid generation device 100 is used. In addition, the arrows indicating "D1", "D2", and "D3" in the drawings are described only for the purpose of explanation, and are not accompanied by entities.

As illustrated in FIG. 1, the electrolytic liquid generation device 100 according to the embodiment includes the electrolysis unit 1, the elastic body 2, the housing 3, the power feeder 44, and a plurality of O-rings 5 (two O-rings 5 in the illustrated example). As illustrated in FIG. 1, the electrolytic liquid generation device 100 according to the embodiment further includes a plurality of nuts 45 (two nuts 45 in the illustrated example), a plurality of spring washers 46 (two spring washers 46 in the illustrated example), and a plurality of washers 47 (two washers 47 in the illustrated example).

### (2.1) Housing

The electrolysis unit 1 and the elastic body 2 are disposed inside the housing 3. As shown in FIG. 1, the housing 3 includes a case 31 and a cover 32.

The case 31 includes a case body 311. The case body 311 is formed in a hollow rectangular parallelepiped shape with one end in the first direction D1 (see the upper surface of FIG. 1) opened. That is, the case body 311 has a housing portion 3111. A connection portion 312 and a connection portion 313 are formed at both ends of the case 31 in the second direction D2. The connection portion 312 is formed with a liquid inflow port, and the inflow port communicates with the housing portion 3111. The connection portion 313 is formed with an outflow port for the electrolytic liquid, and the outflow port communicates with the housing portion 3111. That is, the liquid flowing in from the inflow port is electrolyzed in the housing portion 3111 and flows out from the outflow port as an electrolytic liquid.

The cover 32 is a rectangular plate. The cover 32 is in contact with the case body 311 along the first direction D1 and covers the opening of the housing portion 3111 of the case body 311. A plurality of protrusion rows are formed on the inner surface of the cover facing the opening of the housing portion 3111 of the case body 311.

In addition, the case body 311 has a through hole (that is, an example of an electrode pin hole) through which the electrode pin 41 passes.

The case 31 and the cover 32 are formed of a non-conductive resin such as acrylic.

### (2.2) Elastic Body and Electrolysis Unit

The elastic body 2, the power feeder 44, the anode 13, the conductive film 12, and the cathode 11 are housed in the housing portion 3111 of the case 31. More specifically, the elastic body 2, the power feeder 44, the anode 13, the conductive film 12, and the cathode 11 are stacked in this order along the first direction D1.

The elastic body 2 is formed in a rectangular parallelepiped shape using an elastic material such as rubber. The elastic body 2 includes a rectangular parallelepiped main body and a plurality of protrusions. The plurality of protrusions are formed at each of an end portion in the second direction D2 and an end portion in the third direction D3. The plurality of protrusions are positioning protrusions for positioning the power feeder 44 and the anode 13. The elastic body 2 presses the power feeder 44 and the anode 13 in the first direction D1.

The power feeder 44 is a conductor for supplying power to the anode 13. The power feeder 44 is formed in a rectangular shape elongated in the second direction D2. One surface (that is, a first surface) of the power feeder 44 is in contact with the elastic body 2, and at least a part of the other surface (that is, a second surface) is in contact with the anode 13. The power feeder 44 is formed of, for example, a titanium alloy.

The anode 13 is a first electrode for electrolyzing tap water as a liquid. The anode 13 is formed in a rectangular shape elongated in the second direction D2. One surface (that is, a first surface) of the anode 13 is in contact with the power feeder 44, and at least a part of the other surface (that is, a second surface) of the anode 13 is in contact with the conductive film 12. The anode 13 is formed by, for example, forming a conductive diamond film on a rectangular plate-shaped conductive substrate which is using silicon.

The conductive film 12 is located between the anode 13 and the cathode 11. The conductive film 12 is, for example, a proton conductive type ion exchange film. The conductive film 12 has a plurality of slits 123 extending in the third direction D3. The conductive film 12 has, for example, a comb shape. The conductive film 12 includes a main piece 121 having a longitudinal shape in the second direction D2 and a plurality of protruding pieces 122 having the third direction D3 as its longitudinal direction. Each of the plurality of slits 123 is sandwiched, in the second direction D2, between two protruding pieces 122 adjacent to each other in the second direction D2. The plurality of protruding pieces 122 are arranged at equal intervals along the second direction D2. The longitudinal direction of each of the plurality of protruding pieces 122 may be a direction intersecting the second direction D2, and do not have to be the third direction D3. The width in the third direction D3 of the through hole between two adjacent protruding pieces 122 of the conductive film 12 is larger than the width in the third direction D3 of the anode 13.

The cathode 11 is a second electrode for electrolyzing tap water, which is a liquid. The cathode 11 is electrically connected to an electrode pin 41, which will be described later. The cathode 11 has a rectangular shape elongated in the second direction D2, and is in contact with the conductive film 12 in the first direction D1. The cathode 11 is formed of, for example, a conductive material such as a titanium alloy.

The cathode 11 has a plurality of through holes 111 arranged at equal intervals along the second direction D2. Each of the plurality of through holes 111 has the same shape, for example, a V-shape. Accordingly, at least a part of the interface between the cathode 11 and the conductive film 12 is in contact with the liquid (for example, tap water). Therefore, ozone generated on the surface of the anode 13 is easily dissolved in a liquid (for example, tap water) in a space part (hereinafter, referred to as a "main flow path") between the cathode 11 and the cover 32. In addition, it is possible to reduce a decrease in ozone generation efficiency due to ozone, which is a gas, remaining inside the electrolysis unit.

The width of the plurality of through holes 111 of the cathode 11 in the third direction D3 is larger than the width of the slit 123 of the conductive film 12 in the third direction D3. Therefore, in a plan view as viewed from the first direction D1, an inside of the through hole 111 has a portion that does not overlap the conductive film 12 and the anode 13. That is, the electrolysis unit 1 has a through hole penetrating the electrolysis unit 1 in the first direction D1. Therefore, since the liquid (for example, tap water) can pass through the electrolysis unit 1 along the first direction D1, the ozone concentration in the ozone water in the housing portion 3111 of the case 31 is uniformized, and the generation efficiency of the ozone water is improved.

Each of the cathode 11 and the power feeder 44 is connected to the electrode pin 41. Each of the plurality of electrode pins 41 is elongated in the first direction D1. That is, the longitudinal direction of each electrode pin 41 is a direction parallel to the first direction D1. A first end (see the upper end in FIG. 1) of each electrode pin 41 in the first direction D1 is welded to the power feeder 44 or the cathode 11. In addition, in each electrode pin 41, a screw thread is provided in a predetermined range including a second end (see the lower end in FIG. 1) in the first direction D1.

The O-ring 5, the washer 47, the spring washer 46, and the nut 45 are attached to each of the pair of electrode pins 41.

### (3) Detailed Configuration

### (3.1) Electrolysis Unit

In the electrolysis unit 1, the anode 13 and the cathode 11 face each other in the first direction D1. The conductive film 12 is sandwiched between the anode 13 and the cathode 11.

As shown in FIG. 2, in the third direction D3, a width d2 of the slit 123 between two adjacent protruding pieces 122 of the conductive film 12 is larger than a width d1 of the anode 13. Here, the width d2 of the slit 123 matches with the length d2 of the protruding piece 122 in the third direction D3. Therefore, in the plan view as viewed from the first direction D1, there is a portion of the slit 123 between two adjacent protruding pieces 122 of the conductive film 12 that does not overlap the anode 13.

In the third direction D3, a width d3 of each of the plurality of through holes 111 of the cathode 11 is larger than the width d2 of the slit 123 between two adjacent protruding pieces 122 of the conductive film 12. Therefore, in the plan view as viewed from the first direction D1, there is a portion of the through hole 111 of the cathode 11 that does not overlap the conductive film 12. In the third direction D3, the width d3 of each of the plurality of through holes 111 of the cathode 11 is larger than the width d1 of the anode 13. Therefore, in the plan view as viewed from the first direction D1, there is a portion (hereinafter, referred to as a through hole 14) of the through hole 111 of the cathode 11 which does not overlap the conductive film 12 and the anode 13. In other words, the electrolysis unit 1 has a plurality of through holes 14 arranged at intervals in the second direction.

The space part 15 is a flow path for tap water (that is, an example of a liquid) passing through the electrolysis unit 1 in the first direction D1. As shown in FIG. 2, the space part 15 includes the through hole 111 of the cathode 11 and the slit 123 of the conductive film 12. Here, the through hole 14 communicates with the through hole 111 of the cathode 11 and the slit 123 of the conductive film 12 at least in the third direction D3. The slit 123 or the through hole 111 that does not directly communicate with the through hole 14 also indirectly communicates with the through hole 14 via the slit 123 or the through hole 111 that communicates with the through hole 14.

Therefore, as illustrated in FIG. 4, the tap water (that is, an example of the liquid) flowing into the through hole 14 of the space part 15 not only passes through the through hole 14 along the first direction D1 but also flows into the slit 123 of the conductive film 12 and the through hole 111 of the cathode 11. The tap water (i.e., an example of a liquid) flowing into the slit 123 of the conductive film 12 also passes through the space part 15 and flows out from the through holes 111 of the cathode 11. That is, the tap water (that is, an example of the liquid) flowing into the space part 15 along the first direction D1 also flows in the second direction D2 and the third direction D3 between the anode 13 and the cover 32.

As shown in FIGS. 3 and 4, a main flow path 61 through which tap water (that is, an example of a liquid) flows mainly in the second direction D2 is formed between the electrolysis unit 1 and the cover 32. The outer flow path 62 through which tap water (i.e., an example of a liquid) flows mainly in the second direction D2 is formed between the electrolysis unit 1 and the inner peripheral surface of the case body 311.

When a voltage is applied to the electrolysis unit 1, ozone is generated at the interface between the anode 13 and the conductive film 12. The ozone is dissolved in the tap water flowing through the main flow path 61 in the through hole 111 of the cathode 11, and ozone water (that is, an example of the electrolytic liquid) is generated in the main flow path 61.

On the other hand, in the vicinity of the anode 13, since hydroxide ions in tap water are consumed by electrolysis, the proton concentration increases. Therefore, the hydroxide ion concentration in the vicinity of the anode 13 decreases, and the ozone generation efficiency may decrease.

Further, since the pH in the vicinity of the anode 13 is decreased by the electrolytic treatment, the pH in the vicinity of the cathode 11 is increased. Therefore, calcium compounds contained in tap water are likely to adhere to the cathode 11 as scale. Therefore, the distance between the cathode 11 and the anode 13 in the first direction D1 may be increased by the scale. Therefore, a bias in current density occurs in the electrolysis unit 1, and the ozone generation efficiency decreases. In addition, when a gap is generated between the cathode 11 and the conductive film 12 or between the conductive film 12 and the anode 13, scale is likely to adhere to the gap, and thus the electrical resistance is more likely to increase in a portion where the distance between the cathode 11 and the anode 13 in the first direction D1 is increased. Therefore, the ozone generation efficiency is more likely to decrease.

On the other hand, in the electrolytic liquid generation device 100 according to the embodiment, the space part 15 that is a flow path of tap water (that is, an example of a liquid) penetrates the electrolysis unit 1 in the first direction D1. Therefore, as shown in FIG. 4, a part of the tap water flowing through the outer flow path 62 passes through the space part 15 and flows into the main flow path 61. As a result, in the main flow path 61, ozone and protons of the ozone water are diluted, and unevenness of the ozone concentration and the proton concentration of the ozone water is reduced. Further, in the space part 15, since the through hole 14 and the through hole 111 of the cathode 11 communicate with each other, ozone and protons are less likely to remain in the vicinity of the anode 13. Therefore, in the electrolytic liquid generation device 100, a decrease in the generation efficiency of ozone water can be reduced. In addition, in the electrolytic liquid generation device 100, the flow of the liquid in the space part 15 allows the liquid having a low pH in the vicinity of the anode 13 to flow to the vicinity of the cathode 11. Therefore, in the electrolytic liquid generation device 100, it is possible to reduce an increase in pH in the vicinity of the cathode 11 and reduce adhesion of scale to the cathode 11. Further, in the space part 15, the plurality of through holes 14 are arranged along the second direction D2, which is the direction in which the tap water flows through the outer flow path 62. Therefore, in the space part 15, the tap water easily flows to the plurality of through holes 14 without unevenness, and thus it is possible to further reduce the unevenness of the ozone concentration and the proton concentration of the ozone water in the main flow path 61. Therefore, the generation efficiency of ozone water can be improved.

### (3.2) Housing

The tap water flowing in from the inflow port of the connection portion 312 of the housing 3 is divided into the main flow path 61 and the outer flow path 62 at the upstream end of the electrolysis unit 1 in the second direction D2. On the downstream side of the electrolysis unit 1, the ozone water flowing through the main flow path 61 and the ozone water flowing through the outer flow path 62 merge at the downstream end of the electrolysis unit 1 in the second direction D2 and flow out from the outflow port of the connection portion 312.

Here, as shown in FIG. 5, in the outer flow path 62, the cross-sectional area S2 in a region 622 on the downstream side is smaller than the cross-sectional area S1 in a region 621 on the upstream side. Here, the cross-sectional area S1 and the cross-sectional area S2 have the second direction D2 as their normal directions. The upstream region 621 is, for example, closer to the inflow port than the elastic body 2 in the second direction D2. The downstream region 622 is, for example, closer to the outflow port than the elastic body 2 in the second direction D2. That is, in the outer flow path 62, the cross-sectional area on the downstream side is smaller than the cross-sectional area on the upstream side. This configuration allows the tap water flowing into the region 621 of the outer flow path 62 to easily flow into the main flow path 61 via the space part 15. Therefore, in the electrolysis unit 1, the flow of water in the vicinity of the through hole 111 of the cathode 11 is promoted, and ozone and protons are less likely to remain in the vicinity of the anode 13. Therefore, a decrease in ozone generation efficiency can be reduced. In addition, the adhesion of scale to the cathode 11 can be reduced.

### (4) Effect

The electrolytic liquid generation device 100 of the embodiment includes the electrolysis unit 1 and the housing 3. The electrolysis unit 1 is disposed such that the conductive film 12 is sandwiched between the anode 13 and the cathode 11, and electrolyzes tap water. The electrolysis unit 1 is disposed inside the housing 3. The anode 13 and the cathode 11 are arranged side by side in the first direction D1 together with the conductive film 12, and the thickness direction of each of the cathode 11, the conductive film 12, and the anode 13 is arranged along the first direction D1. The first direction is a stacking direction of the conductive film 12. The housing 3 includes an inflow port through which tap water supplied to the electrolysis unit 1 flows in and an outflow port through which ozone water generated in the electrolysis unit 1 flows out. The flow paths 61 and 62 for tap water and ozone water are formed between the inner peripheral surface of the housing 3 and the electrolysis unit 1. The electrolysis unit 1 includes the space part 15 that penetrates the electrolysis unit 1, and the liquid flows through the space part 15 from the anode 13 to the cathode 11. The through hole 111 of the cathode 11 included in the space part 15 is open to the main flow path 61, and at least a part of the conductive film 12 is exposed to the main flow path 61.

Therefore, in the electrolytic liquid generation device 100 of the embodiment, since the tap water passes through the space part 15, the ozone water does not stay in the vicinity of the electrolysis unit 1, and the ozone is easily diffused. Therefore, it is possible to reduce a decrease in the generation efficiency of the ozone water due to the ozone water remaining in the vicinity of the electrolysis unit 1. In addition, since it is possible to reduce the adhesion of scale to the electrolysis unit 1 due to the ozone water remaining in the vicinity of the electrolysis unit 1, the generation efficiency of the ozone water is less likely to decrease.

In addition, in the electrolytic liquid generation device 100 of the embodiment, the outer flow path 62 located between the inner peripheral surface of the housing 3 and the anode 13 is formed. In the outer flow path 62, the cross-sectional area S2 of the region 622 having the second direction D2 as its normal direction is smaller than the cross-sectional area S1 of the region 621 having the second direction D2 as its normal direction. The region 621 is closer to the inflow port than the region 622, and the region 622 is closer to the outflow port than the region 621.

Therefore, in the electrolytic liquid generation device 100 of the embodiment, since the tap water flowing into the outer flow path 62 from the region 621 does not easily flow into the region 622, a part of the tap water flowing through the outer flow path 62 easily passes through the space part 15 and flows into the main flow path 61. This facilitates the flow of water in the vicinity of electrolysis unit 1. In addition, since it is possible to reduce the ratio of the tap water that passes through the outer flow path 62 in an unreacted state, it is possible to improve the ozone concentration of the ozone water generated by the electrolytic liquid generation device 100.

In addition, in the electrolytic liquid generation device 100 of the embodiment, the cathode 11 has the through hole 111 penetrating the cathode 11 in the first direction D1. The conductive film 12 has the slit 123 penetrating the conductive film 12 in the first direction D1. In the third direction D3, the width d3 of the through hole 111 of the cathode 11 is larger than the width d1 of the anode 13. In the third direction D3, the width d2 of the slit 123 of the conductive film 12 is larger than the width d1 of the anode 13. The space part 15 includes a position where the through hole 111 of the cathode 11 and the slit 123 of the conductive film 12 overlap in the first direction D1.

Therefore, in the electrolytic liquid generation device 100 of the embodiment, in the plan view as viewed from the first direction D1, the through hole 111 of the cathode 11 and the slit 123 of the conductive film 12 overlap each other, and the space part 15 includes the through hole 14 at a position where the anode 13 does not overlap. As a result, the through hole 111 of the cathode 11 and the through hole 14 communicate with each other in the space part 15, so that ozone and protons generated in the electrolysis unit 1 are easily diluted with tap water. Therefore, the generation efficiency of ozone water can be enhanced.

In the electrolytic liquid generation device 100 of the embodiment, the width d3 of the through hole 111 of the cathode 11 is larger than the width d2 of the slit 123 of the conductive film 12 in the third direction D3. This facilitates formation of the through hole 14 in the electrolysis unit 1, and facilitates generation of a flow of water passing through the space part 15 and penetrating the electrolysis unit 1. Therefore, the generation efficiency of ozone water can be enhanced.

### (Modifications)

(1) In the electrolytic liquid generation device 100 according to the embodiment, the conductive film 12 has a comb shape. However, the conductive film 12 is not limited thereto as long as the conductive film 12 has a plurality of slits 123 in a direction intersecting the first direction D1 and the second direction D2 and has a shape in which the space part 15 is formed in the electrolysis unit 1. Similarly, the shape of the through hole 111 of the cathode 11 is not limited to the V-shape, and may be another shape.
(2) In the electrolytic liquid generation device 100 according to the embodiment, the liquid is tap water and the electrolytic liquid is ozone water. However, the combination of the liquid and the electrolytic liquid may be a combination of any two liquids as long as the electrolytic liquid can be generated by electrolyzing the liquid.

### (Aspect)

An electrolytic liquid generation device (100) according to a first aspect includes an electrolysis unit (1) and a housing (3). The electrolysis unit (1) is disposed such that a conductive film (12) is sandwiched between a first electrode (13) and a second electrode (11), and electrolyzes a liquid. The electrolysis unit (1) is disposed inside the housing (3). The first electrode (13), the second electrode (11), and the conductive film (12) are arranged side by side in a first direction (D1). The first direction (D1) is a stacking direction of the conductive film (12). The housing (3) includes an inflow port through which the liquid to be supplied to the electrolysis unit (1) flows in and an outflow port through which the electrolytic liquid generated in the electrolysis unit (1) flows out. Flow paths (61,62) for liquid and electrolytic liquid are formed between an inner peripheral surface of the housing (3) and the electrolysis unit (1). The electrolysis unit (1) includes a space part (15) penetrating the electrolysis unit (1) and through which the liquid flows from the first electrode (13) to the second electrode (11). The space part (15) opens to the flow path (61,62), and at least a part of the conductive film (12) is exposed to the flow path (61).

In the electrolytic liquid generation device (100) according to the above aspect, since the liquid passes through the space part (15), the electrolytic liquid is less likely to remain in the vicinity of the electrolysis unit (1). Therefore, it is possible to reduce a decrease in the generation efficiency of the electrolytic liquid due to the electrolytic liquid remaining in the vicinity of electrolysis unit (1).

An electrolytic liquid generation device (100) according to a second aspect includes an electrolysis unit (1) and a housing (3). The electrolysis unit (1) is disposed such that a conductive film (12) is sandwiched between a first electrode (13) and a second electrode (11), and electrolyzes a liquid. The electrolysis unit (1) is disposed inside the housing (3). The first electrode (13), the second electrode (11), and the conductive film (12) are arranged side by side in a first direction (D1). The first direction (D1) is a stacking direction of the conductive film (12). The housing (3) includes an inflow port through which the liquid to be supplied to the electrolysis unit (1) flows in and an outflow port through which the electrolytic liquid generated in the electrolysis unit (1) flows out. Flow paths (61,62) for liquid and electrolytic liquid are formed between an inner peripheral surface of the housing (3) and the electrolysis unit (1). The flow path (61,62) includes an outer flow path (62) located between the inner peripheral surface of the housing (3) and the first electrode (13). In the outer flow path (62), an area (S2) of a cross section close to the outflow port is smaller than an area (S1) of a cross section close to the inflow port, a normal line of the cross section close to the outflow port being a second direction (D2), the second direction being a flow path direction of the liquid, a normal line of the cross section close to the inflow port being the second direction.

In the electrolytic liquid generation device (100) according to the above aspect, the electrolytic liquid is less likely to remain in the vicinity of the electrolysis unit (1). In addition, since the liquid is less likely to flow in a direction from the inflow port toward the outflow port in the outer flow path (62), a part of the liquid flowing through the outer flow path (62) is likely to flow into the flow path (61). Therefore, it is possible to reduce a decrease in the generation efficiency of the electrolytic liquid due to the electrolytic liquid remaining in the vicinity of electrolysis unit (1). In addition, since a ratio of the liquid passing through the outer flow path (62) without being electrolyzed can be reduced, the concentration of the electrolysis product of the electrolytic liquid generated by the electrolytic liquid generation device (100) can be improved.

In an electrolytic liquid generation device (100) according to a third aspect, in the first aspect, the flow path (61,62) includes an outer flow path (62) located between an inner peripheral surface of the housing (3) and the first electrode (13). In the outer flow path (62), an area (S2) of a cross section close to the outflow port is smaller than an area (S1) of a cross section close to the inflow port, a normal line of the cross section close to the outflow port being a second direction (D2), the second direction being a flow path direction of the liquid, a normal line of the cross section close to the inflow port being the second direction.

In the electrolytic liquid generation device (100) according to the above aspect, since the liquid is less likely to flow in a direction from the inflow port toward the outflow port in the outer flow path (62), a part of the liquid flowing through the outer flow path (62) easily passes through the space part (15) and flows into the flow path (61). Therefore, a flow of liquid is likely to occur in the vicinity of electrolysis unit (1). In addition, since a ratio of the liquid passing through the outer flow path (62) without being electrolyzed can be reduced, the concentration of the electrolysis product of the electrolytic liquid generated by the electrolytic liquid generation device (100) can be improved.

In the electrolytic liquid generation device (100) according to a fourth aspect, in the first or third aspect, the second electrode (11) includes a through hole (111) penetrating the second electrode (11) in the first direction (D1). The conductive film (12) includes a penetrating portion (123) penetrating the conductive film (12) in the first direction (D1). In the third direction (D3), a width (d3) of the through hole (111) of the second electrode (11) is larger than a width (d1) of the first electrode (13). The third direction (D3) intersects the first direction (D1) and a direction in which the liquid flows through the flow path (61,62). In the third direction (D3), a width (d2) of the penetrating portion (123) of the conductive film (12) is larger than the width (d1) of the first electrode (13). The space part (15) includes a position where the through hole (111) of the second electrode (11) and the penetrating portion (123) of the conductive film (12) overlap each other in the first direction (D1).

In the electrolytic liquid generation device (100) according to the above aspect, in a plan view from the first direction (D1), the through hole (111) of the second electrode (11) and the penetrating portion (123) of the conductive film (12) overlap each other, and the space part (15) is formed at a position where the first electrode (13) does not overlap. As a result, the through hole (111) of the second electrode (11) and the space part (15) communicate with each other, so that a flow of liquid in the vicinity of the electrolysis unit (1) is likely to occur. Therefore, the generation efficiency of the electrolytic liquid can be enhanced.

In an electrolytic liquid generation device (100) according to a fifth aspect, in the fourth aspect, in the third direction (D3), the width (d3) of the through hole (111) of the second electrode (11) is greater than the width (d2) of the penetrating portion (123) of the conductive film (12).

In the electrolytic liquid generation device (100) according to the above aspect, since the space part (15) is likely to be formed in the electrolysis unit (1), a flow of liquid in the vicinity of electrolysis unit (1) is likely to occur. Therefore, the generation efficiency of the electrolytic liquid can be enhanced.

### REFERENCE SIGNS LIST

- 100: electrolytic liquid generation device
- 1: electrolysis unit
- 11: cathode
- 111: through hole
- 12: conductive film
- 121: main piece
- 122: protruding piece
- 123: slit
- 13: anode
- 14: through hole
- 15: space part
- 2: elastic body
- 3: housing
- 31: case
- 311: case body
- 3111: housing portion
- 312: connection portion
- 313: connection portion
- 32: cover
- 41: electrode pin
- 44: power feeder
- 45: nut
- 46: spring washer
- 47: washer
- 5: O-ring
- 61: main flow path (flow path)
- 62: outer flow path (flow path)
- 621: region
- 622: region
- D1: first direction
- D2: second direction
- D3: third direction
- S1: cross-sectional area
- S2: cross-sectional area
- d1: width of first electrode
- d2: width of penetrating portion of conductive film
- d3: width of through hole

## Claims

1. An electrolytic liquid generation device comprising:
an electrolysis unit configured to electrolyze a liquid, the electrolysis unit including a first electrode, a second electrode, and a conductive film provided between the first electrode and the second electrode; and
a housing in which the electrolysis unit is disposed,
wherein
the first electrode, the second electrode, and the conductive film are disposed side by side in a first direction that is a stacking direction of the conductive film,
the housing includes:
an inflow port through which the liquid to be supplied to the electrolysis unit flows in; and
an outflow port through which an electrolytic liquid generated in the electrolysis unit flows out,
a flow path for the liquid and the electrolytic liquid is formed between an inner peripheral surface of the housing and the electrolysis unit,
the electrolysis unit includes a space part that penetrates the electrolysis unit and through which the liquid flows from the first electrode to the second electrode,
the space part is open to the flow path, and
at least a part of the conductive film is exposed to the flow path.

2. An electrolytic liquid generation device comprising:
an electrolysis unit configured to electrolyze a liquid, the electrolysis unit including a first electrode, a second electrode, and a conductive film provided between the first electrode and the second electrode; and
a housing in which the electrolysis unit is disposed,
wherein
the first electrode, the second electrode, and the conductive film are disposed side by side in a first direction that is a stacking direction of the conductive film,
the housing includes:
an inflow port through which the liquid to be supplied to the electrolysis unit flows in; and
an outflow port through which an electrolytic liquid generated in the electrolysis unit flows out,
a flow path of the liquid and the electrolytic liquid is formed between an inner peripheral surface of the housing and the electrolysis unit,
the flow path includes an outer flow path located between the inner peripheral surface of the housing and the first electrode, and
in the outer flow path, an area of a cross section close to the outflow port is smaller than an area of a cross section close to the inflow port, a normal line of the cross section close to the outflow port being a second direction, the second direction being a flow path direction of the liquid, a normal line of the cross section close to the inflow port being the second direction.

3. The electrolytic liquid generation device according to claim 1, wherein
the flow path includes an outer flow path located between the inner peripheral surface of the housing and the first electrode, and
in the outer flow path, an area of a cross section close to the outflow port is smaller than an area of a cross section close to the inflow port, a normal line of the cross section close to the outflow port being a second direction, the second direction being a flow path direction of the liquid, a normal line of the cross section close to the inflow port being the second direction.

4. The electrolytic liquid generation device according to claim 1 or 3, wherein
the second electrode includes a through hole penetrating the second electrode in the first direction,
the conductive film includes a penetrating portion penetrating the conductive film in the first direction,
in a third direction intersecting the first direction and a direction in which the liquid flows through the flow path, a width of the through hole of the second electrode is larger than a width of the first electrode, and a width of the penetrating portion of the conductive film is larger than the width of the first electrode, and
the space part includes a position where the through hole of the second electrode and the penetrating portion of the conductive film overlap each other in the first direction.

5. The electrolytic liquid generation device according to claim 4, wherein
a width of the through hole of the second electrode is larger than the width of the penetrating portion of the conductive film in the third direction.
